# EUROPEAN PATENT SPECIFICATION

(11) **EP 3 408 780 B1**
(45) Date of publication and mention of the grant of the patent: **12.08.2020**
(21) Application number: 17702342.1
(22) Date of filing: 26.01.2017
(51) Int. Cl.: G06F 8/61, G06F 21/53, G06F 9/455, G06F 21/62

(54) **DISK ENCRYPTION**
PLATTENVERSCHLÜSSELUNG
CRYPTAGE DE DISQUE

(30) Priority: 29.01.2016 WO PCT/EP2016/153534
(43) Date of publication of application: 05.12.2018
(73) Proprietor: British Telecommunications public limited company, London EC1A 7AJ (GB)
(72) Inventor: EL-MOUSSA, Fadi, London EC4V 5BT (GB); DIMITRAKOS, Theo, London EC4V 5BT (GB)
(74) Representative: British Telecommunications public limited company Intellectual Property Department
(86) International application number: PCT/EP2017/051613
(87) International publication number: WO 2017/129659

(56) References cited:
- WO-A1-2013/091221
- US-A1- 2014 282 539
- FENGZHE ZHANG ET AL: "CloudVisor", OPERATING SYSTEMS PRINCIPLES, ACM, 2 PENN PLAZA, SUITE 701 NEW YORK NY 10121-0701 USA, 23 October 2011 (2011-10-23), pages 203-216, XP058005755, DOI: 10.1145/2043556.2043576 ISBN: 978-1-4503-0977-6
- Tilo Müller ET AL: "TreVisor OS-Independent Software-Based Full Disk Encryption Secure Against Main Memory Attacks", Applied Cryptography and Network Security; 10th International Conference, ACNS 2012, 26 June 2012 (2012-06-26), pages 66-83, XP055284332, ISBN: 978-3-642-31284-7 Retrieved from the Internet: URL:https://mirror.robert-marquardt.com/do wnloads/trevisor.pdf [retrieved on 2016-06-29]

## Description

The present invention relates to encrypted data storage disks. In particular, the invention relates to whole disk encryption.

Data encryption is employed to secure data against unauthorised access. For example, data stored in a file system of a computer system can be encrypted such that unauthorised users accessing the file are unable to decrypt the file without one or more requisite cryptographic keys. Whole disk encryption (WDE) - also known as full disk encryption (FDE) - is a technique for encrypting data stored on a data storage disk in 'rest' state to protect against access to the disk by an unauthorised user or theft of the disk while it is not in use. Such a disk can include a physical disk or a virtual disk resource provided in a virtualised computing environment. Where a whole disk is encrypted it is difficult for an attacker to make sense of data stored on the disk due to the encryption. Whole disk encryption is one of the most common ways organisations protect their data from theft or loss.

WDE solutions operate on both physical computer systems with physical disks and virtualised computer systems with potentially virtualised data storage disk such as cloud computing platforms. Approaches to WDE are generally based on a "pre-boot" scheme that applies before bootstrapping of an operating system on a physical or virtualised computer system. Specialised encryption software is installed in a portion of a disk used to bootstrap the operating system such as a portion of the disk containing an operating system bootloader. The location of the encryption software varies in different solutions: some solutions employ a Master Boot Record (MBR) as a first sector of a disk; alternative solutions create a dedicated partition and install the encryption software there. For example, the SecureCloud service provided by Trend Micro requires at least 100 MB of free storage on a boot partition of a disk in order to install its encryption agent software.

The encryption software used in WDE encrypts all partitions selected for encryption on a disk except for that part of the disk storing the encryption software itself (such as an MBR or such dedicated partition). It is not possible for the WDE encryption software to encrypt the part of the disk storing itself because so doing will prevent the computer from bootstrapping since the bootstrap or bootloader itself will be encrypted. Thus in WDE a computer boots from the MBR or un-encrypted partition and the encryption software decrypts and loads the operating system from an encrypted partition.

Accordingly, despite its name, WDE is not actually the encryption of a whole disk where an operating system bootstrap or bootloader is required on the disk. There is therefore a part of a disk that is retained unencrypted so that the encryption software itself can be loaded and executed. This unencrypted portion of the disk constitutes a vulnerability that can be exploited by attacks such as the "bootkit" attack in which an MBR or boot sector of an unencrypted part of a disk is infected with malicious software to tamper with the boot process of a computer, or even to simply passively await a user input of a decryption PIN, key or passphrase and capture such information to access a decryption key that will be loaded in the computer memory.

International application WO 2013/091221 discloses a wrapped nested virtualization, wherein a hypervisor is run in a guest virtual machine hosted on another hypervisor. It further discloses migration of a virtual machine to a different machine and encryption/ decryption of network and storage data. US patent application 2014/0282539 A1 discloses a method for enabling efficient nested virtualization and allows virtual machine migration at runtime to a hypervisor of lower level.

Thus there is a need to address the considerable disadvantages of the known techniques to provide for the secure storage of data in a computer system by whole disk encryption without the aforementioned disadvantages.

The present invention accordingly provides, in a first aspect, a computer implemented method of providing whole disk encryption for a virtualised computer system comprising: providing a software component executing in a first virtual machine for instantiation in a first hypervisor, the software component invoking a second hypervisor within the first virtual machine for instantiating a disk image of the virtualised computer system as a second virtual machine, and the software component being configured to install a software agent in the second virtual machine, the software agent being adapted to: a) encrypt the instantiated disk image; b) encrypt data written, by the second virtual machine, to the instantiated disk image at a runtime of the second virtual machine; and c) decrypt data read, by the second virtual machine, from the instantiated disk image at a runtime of the second virtual machine, wherein the software component is configured to migrate the second virtual machine at a runtime of the second virtual machine to the first hypervisor so as to provide a wholly encrypted disk image for the second virtual machine executing in the first hypervisor.

Preferably the software component is further configured to access one or more cryptographic keys for the encryption and decryption from a key management server and to provide the key(s) to the software agent.

Preferably the migration is a live migration such that the second virtual machine transfers from executing in the second hypervisor to executing in the first hypervisor with continuing operation for users of the second virtual machine.

Preferably the second virtual machine executing in the second hypervisor is a source virtual machine and the live migration includes: copying a disk image for the source virtual machine to a new virtual machine instantiated in the first hypervisor as a target virtual machine; maintaining a synchronisation of a state of the target virtual machine with a state of the source virtual machine; transitioning users of the source virtual machine to the target virtual machine; and ceasing execution of the source virtual machine such that the target virtual machine constitutes the second virtual machine migrated to the first hypervisor.

Preferably the method further comprises terminating the second hypervisor on completion of the migration.

Preferably the method further comprises terminating the first virtual machine on completion of the migration.

The present invention accordingly provides, in a second aspect, a data processing system to provide whole disk encryption for a virtualised computer system, the data processing system comprising a processor and a data store, wherein the processor is adapted to undertake the steps of: providing a software component executing in a first virtual machine for instantiation in a first hypervisor, the software component invoking a second hypervisor within the first virtual machine for instantiating a disk image of the virtualised computer system as a second virtual machine, and the software component being configured to install a software agent in the second virtual machine, the software agent being adapted to: a) encrypt the instantiated disk image; b) encrypt data written, by the second virtual machine, to the instantiated disk image at a runtime of the second virtual machine; and c) decrypt data read, by the second virtual machine, from the instantiated disk image at a runtime of the second virtual machine, wherein the software component is configured to migrate the second virtual machine at a runtime of the second virtual machine to the first hypervisor so as to provide a wholly encrypted disk image for the second virtual machine executing in the first hypervisor.

The present invention accordingly provides, in a fifth aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:
Figure 1 is a block diagram of a computer system suitable for the operation of embodiments of the present invention;
Figures 2a, 2b and 2c are schematic illustrations of a security virtual machine (VM) in accordance with an embodiment of the present invention;
Figure 3 is a flow diagram of a method of providing WDE for a virtualised computer system in accordance with an embodiment of the present invention;
Figures 4a, 4b and 4c are schematic illustrations of a security VM for the instantiation of an encrypted disk image in accordance with an embodiment not belonging to J Z the present invention;
Figure 5 is a flow diagram of a method of instantiating an encrypted disk image for a virtualised computer system in accordance with an embodiment not belonging to the present invention;
Figure 6 is a schematic illustration of a security VM in accordance with an embodiment not belonging to the present invention; and
Figure 7 is a flow diagram of a method of providing WDE for a virtualised computer system in accordance with an embodiment not belonging to the present invention.

Embodiments of the present invention overcome the aforementioned disadvantages of WDE in virtualised computing environments in which virtualisations of computing devices are provided as virtual machines (VMs) to execute on potentially distributed physical computing hardware under the control of hypervisor software. A hypervisor or virtual machine monitor (VMM) is a piece of computer software, firmware or hardware that creates and executes VMs. One or more computer systems on which a hypervisor is running one or more VMs is referred to as a host machine. Each executing VM is typically referred to as a guest machine. Software executing in a VM can include a complete software implementation of a computer system including operating systems, software services, middleware, databases and applications. Hypervisors typically provide VMs with real or emulated computing resources including data storage resources, input/output resources, networking, processors, memory and the like. Hypervisors can include a data store that is a physical or virtual storage resource for the storage of data. The hypervisor data store can be provided for access by one or more VMs executing in the hypervisor such that the data store can be shared between potentially multiple VMs. An example of such a data store can be provided by vSphere Storage for VMWARE hypervisors (as documented in the 2015 VMWARE document "vSphere Storage, ESXI 6.0, vCenter Server 6.0", accessible from pubs.vmware.com/vsphere-0/topic/com.vmware.lCbase/PDF/vsphere-esxi-vcenter-server-60-storage-guide.pdf) .

A software installation for a VM can manifest an image of a data storage disk device that is instantiated in a virtualisation of a requisite hardware environment. Accordingly, WDE applied to a virtualised computer system such as a VM involves encrypting a disk image for the VM. However, encryption of an entire disk image suffers the aforementioned problems that the VM would not be bootable because a bootstrap or bootloader portion of the disk is encrypted and not accessible. Embodiments of the present invention mitigate this challenge.

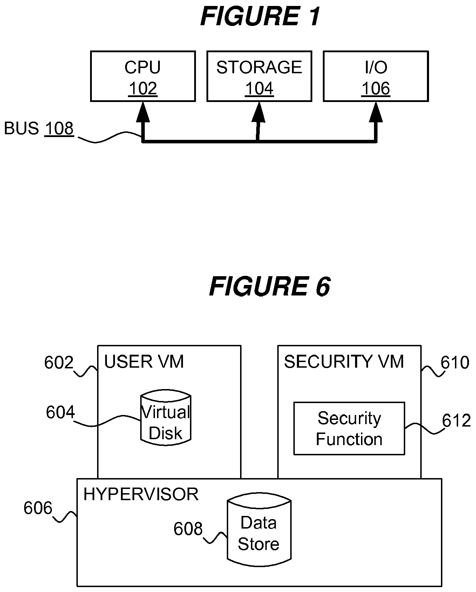

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

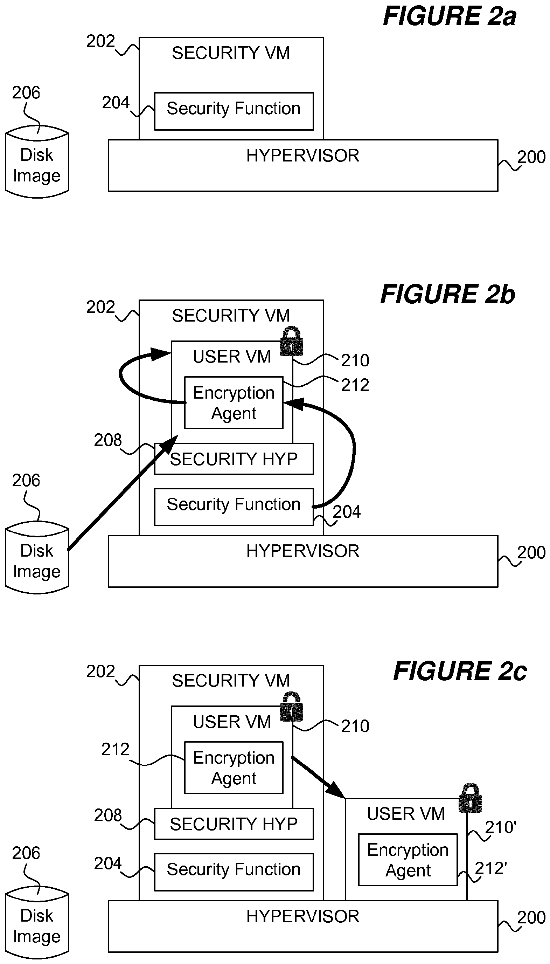

Figures 2a, 2b and 2c are schematic illustrations of a security VM in accordance with an embodiment of the present invention. Starting with Figure 2a a security VM 202 is a VM instantiated to execute on a hypervisor 200. The hypervisor 200 is a software, hardware, firmware or combination component for the creation of VMs such as by instantiating VM images. The hypervisor 200 can be of any suitable type such as a Type-1 or Type-2 hypervisor as defined by Gerald J. Popek and Robert P. Goldberg in their paper "Formal Requirements for Virtualizable Third Generation Architectures" (1974).

The security VM 202 is so-called because it implements several of the security features in accordance with an embodiment of the present invention as will be described below. For example, the security VM 202 is a VM executing in a VMWARE hypervisor, such as a Microsoft Windows based VM or a Linux based VM. The security VM 202 includes a security function 204 as a software component providing security services in accordance with an embodiment of the present invention. The security function is a software component such as a software service, application, driver, library, script(s) or the like for executing or triggering the execution of a second hypervisor, referred to herein as a security hypervisor 208 for its use in providing security features in accordance with an embodiment of the present invention. As illustrated in Figure 2b, the security hypervisor 208 is executed within the security VM 202 such as a hypervisor suitable for executing in a windows environment executing in a windows VM, or other such suitable arrangements as will be apparent to those skilled in the art.

A disk image 206 is also provided as a data structure, data stream or file including a representation of a disk storage device such as a virtual disk containing an installation of software required for the load and execution of a virtual machine. The disk image 206 is at least partially unencrypted such that the disk image is susceptible to theft or attack. For example the disk image 206 is a VMWARE VM Disk (VMDK) as a file of a particular format that describes containers for virtual hard disk drives to be used to instantiate VMs in hypervisors such as VMWARE Workstation or VirtualBox. In one embodiment the disk image 206 includes data corresponding to a virtual disk storage device containing an installed and bootable operating system such as Microsoft Windows and having installed thereon device drivers, services, system libraries and possibly applications software to constitute a VM when instantiated for execution in a hypervisor. Instantiation of a VM refers to the generation of an instance of a VM based on, for example, a disk image for the VM by way of a hypervisor. A VM requires a virtualisation of a computing environment including computing resources and facilities that are provided, emulated or simulated by a hypervisor. Instantiation is based on a definition of requirements for resources (such as memory, processor(s), networking, storage and the like) expressed in, or in association with, a disk image file to provide concrete instances of resources by or with the hypervisor to provide a VM. Thus the disk image 206 is suitable for instantiation as a VM, referred to herein as a user VM 210.

Accordingly, as illustrated in Figure 2b, the security function 204 causes the security hypervisor 208 to instantiate the user VM 210 on the basis of the disk image 206 such that the user VM 210 executes within the security VM 202 by way of the security hypervisor 208.

The security function 204 further installs a software agent, referred to herein as encryption agent 212, into the executing user VM 210. The encryption agent 212 is a software routine executing with an operating system of the user VM 210 to provide encryption and decryption functions for data storage devices of the user VM 210. For example, the encryption agent 212 is a service, device driver or other suitable software component. The function of the encryption agent 212 can be considered in two parts.

Firstly, the encryption agent 212 is operable to encrypt the data storage devices of the user VM 210 in order that the entire data storage for the user VM 210 is encrypted. Thus, a disk image of the user VM 210 after encryption of the data storage devices by the encryption agent 212 is a wholly encrypted disk image including encryption of partitions for booting an operating system of the user VM 210 and/or a MBR of the user VM 210.

Secondly, the encryption agent 212 is operable to encrypt data stored to data storage devices of the user VM 210 and decrypt data retrieved from data storage devices of the user VM 210. In this way the user VM 210 in execution, including applications and services executing therein, is able to read and write to the data storage devices of the user VM 210 while retaining a wholly encrypted disk image of the user VM 210.

In providing the encryption agent 212, the security function 204 can cooperate with, communicate with or otherwise operate with a source of cryptographic information such as cryptographic keys including symmetric and/or asymmetric keys for the provision of the encryption and decryption functions of the encryption agent 212. For example, in one embodiment the security function 204 communicates with a key management server or the like which may be local or remote to the hypervisor 200. Alternatively the security function or additional software (not shown) can manage cryptographic keys and/or encryption algorithms employed. In a further alternative, the encryption agent is operable to communicate with a key management server or the like to obtain the required cryptographic resources.

Data storage devices of a user VM 210 include virtualised data storage devices for the storage of software and data and include all aspects of a virtualised storage device such as a virtual disk device including data storage devices such as an MBR, logical and virtualised physical partitions, boot partitions, primary and secondary partitions, special reserved areas of disk for system, boot or other functions and the like. Thus, typically a disk image 206 for a VM will include a plurality for storage devices (e.g. an MBR and a primary partition, or a boot partition, a primary partition and one or more secondary partitions, and many other arrangements as will be apparent to those skilled in the art).. However, the references herein to data storage devices (plural) for user VM 210 should not preclude an environment where the user VM 210 includes, contains or is contained within a single data storage device such as may be apparent to those skilled in the art.

The encryption agent 212 can employ one or more functions of an operating system of the user VM 210 such as specific operating system encrypted file-system services or facilities. Alternatively, the encryption agent 212 can be configured to identify and intercept file-system operations such as read, write and file creation operations. This can be achieved, for example, by way of a file system operation interceptor as a software, hardware, firmware or combination component that detects requests for file system operations in respect of data for software executing in the user VM 210. Such a file system operation interceptor can be implemented in a number of ways. For example, a file system operation interceptor can detect operating system application programming interface (API) calls by software such as an application or service executing in the user VM 210 to identify file system operation requests by the software corresponding to file system API invocations. Such detection can be achieved by intercepting a request by the application for a file system operation such as by a software technique known as "hooking".

Hooking is a technique for intercepting function calls, messages or events passed between software components such as a software application executing in the user VM 210 and an operating system file-system API. For example, hooking can be employed at a runtime of the user VM 210 such as by way of facilities and/or services provided by an operating system of the user VM 210 or software associated with the operating system. The paper "Intercepting Arbitrary Functions on Windows, UNIX, and Macintosh OS X Platforms" (Daniel Myers and Adam Bazinet, University of Maryland, 2004) describes a number of techniques for intercepting functions in a variety of operating systems. For example, the Detours library from Microsoft provides for the interception of system function calls in order to instrument code or extent operating system functionality (see "Detours: Binary Interception of Win32 Functions", Galen Hunt and Doug Brubacher, Microsoft Research, 1999). Jurrian Bremer also describes techniques for intercepting system calls in his paper "Intercepting System Calls on x86_64 Windows" (2012, jbremer.org/intercepting-system-calls-on-x86_64-windows/). Further, the paper "Intercepting System API Calls" (Seung-Woo Kim, Intel, 2004) describes various techniques for function interception and presents a generic method to achieve function interception. Alternative tools and techniques for providing hooking for applications executed by an operating system are described, listed and referenced at en.wikipedia.org/wiki/Hooking.

Thus the encryption agent 212 provides WDE of data storage devices of the user VM 210 and accordingly, when a disk image of the user VM 210 is taken, an encrypted disk image. The encryption agent 212 also thus provides, at runtime of the user VM 210, decryption of encrypted data stored to virtual data storage devices of the user VM 210 and encryption of data for storage to the virtual storage devices.

On completion of the encryption of the data storage devices of the user VM 210 the security function 204 is further adapted to perform a VM migration of the user VM 210 to the hypervisor 200 in which the security VM 202 executes. In an alternative embodiment the user VM 210 can be migrated to a different hypervisor outside the security VM 202. Preferably the migration of the user VM 210 is a live migration such that the user VM 210 is moved while operating in a running state to the hypervisor 200. A live migration may retain client connections to the user VM 210, memory state, storage state, network connectivity state, application states and the like such that the user VM 210 continues to execute following the migration with no loss of state. Such live migration can be provided by hypervisors such as VMWARE ESX, VirtualBox, IBM VPAR (with an addition migrator), Xen, OpenVZ, KVM, Oracle VM Server, POWER Hypervisor (PHYP) and others as will be apparent to those skilled in the art. The live migration can alternatively or additionally be achieved by a process of copying a disk image for the user VM 210 to a new user VM 210' instantiated in the hypervisor 200 and maintaining a synchronisation of a state of the new virtual machine with a state of the user VM 210. Then, users of the user VM 210 in the security hypervisor 208 can be transitioned to the user VM 210' in the hypervisor 200 and execution of the user VM 210 in the security hypervisor 208 can be ceased such that the user VM 210' constitutes the migrated user VM 210.

In some embodiments the security VM may require special privileges to be able to trigger, execute or undertake the migration of the user VM 210 to the hypervisor 200 such as special privileges in respect of the hypervisor 200 or the security hypervisor 208 to achieve the migration.

Thus, as illustrated in Figure 2b, the user VM 210 in the security hypervisor 208 is migrated to the hypervisor 200 as user VM 210' including encryption agent 212' such that the data storage devices for the user VM 210' are wholly encrypted which, when stored, recorded or captured as a disk image file, provides a wholly encrypted disk image for the user VM 210'.

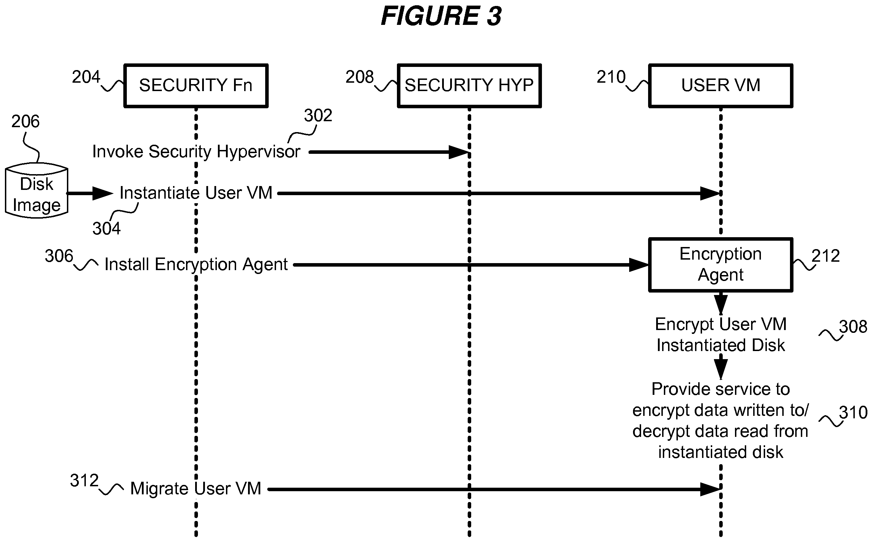

Figure 3 is a flow diagram of a method of providing WDE for a virtualised computer system in accordance with an embodiment of the present invention. The method generally involves the security function 204 of the security VM 202, the security hypervisor 208 executing in the security VM 202 and the user VM 210 executing in the security hypervisor 208. Initially, at step 302, the security function 204 invokes the security hypervisor 208. At step 304 the security function 204 instantiates the user VM 210 from disk image 206. At step 306 the security function installs the encryption agent 212 in the user VM 210. At step 308 the security agent 212 encrypts the data storage devices of the user VM 210. At step 310 the encryption agent 212 provides services to encrypt data written to and decrypt data read from the data storage devices of the user VM 210. Subsequently, at step 312, the security function 204 migrates the user VM 210 to the hypervisor 200 as user VM 210'. On completion of the method of Figure 3 the user VM 210 no longer executes in the security hypervisor 208 on account of the migration and the security hypervisor 208 can be closed. Further, the security VM 202 can be closed. Thus, in this way WDE of data storage devices for a user VM 210 can be provided including encryption of MBR and/or boot partitions so as not to leave unencrypted partitions vulnerable to theft, intrusion, modification and/or attack.

Following provision of the user VM 210' migrated to the hypervisor 200 with encrypted data storage devices, the shutdown, closure, saving or recording of an image of the user VM 210' will result in a new disk image for the user VM 210' that includes the encrypted data storage devices, referred to herein as an encrypted disk image 406. Since the data storage devices of the encrypted disk image 406 are encrypted it is not possible to re-instantiate the user VM 210' from the encrypted disk image 406 using a conventional hypervisor with a bootloader, conventional basic input/output system (BIOS) or the like, since the hypervisor will be unable to decrypt the MBR or boot partition to effect bootstrapping of the user VM 210'. Accordingly embodiments of the present invention seek to mitigate these challenges.

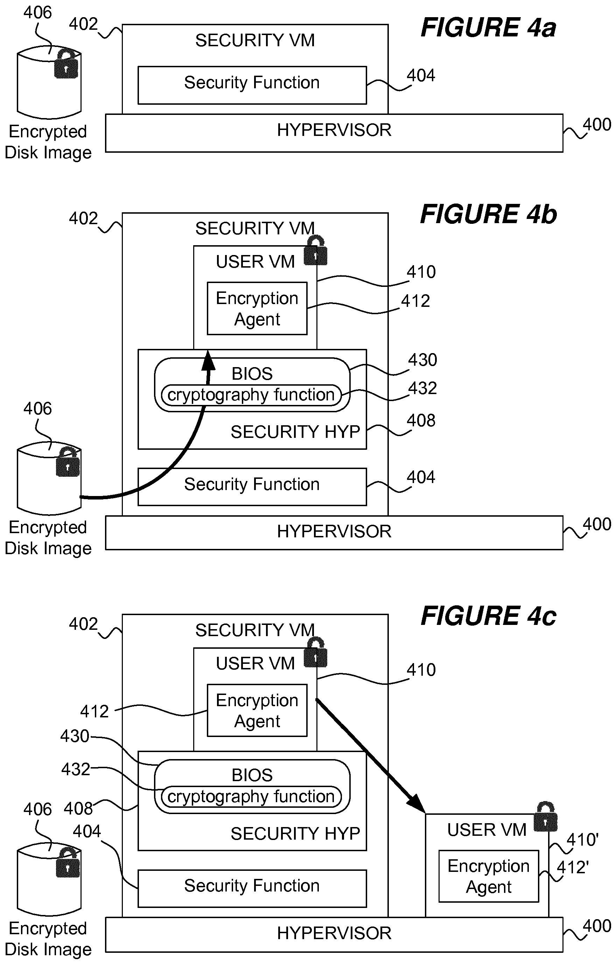

Figures 4a, 4b and 4c are schematic illustrations of a security VM 402 for the instantiation of an encrypted disk image 406 in accordance with an embodiment not belonging to J the present invention. The encrypted disk image 406 is a file, stream or data including wholly encrypted virtualised data storage devices for a user VM 410 having an encryption agent 412 substantially as hereinbefore described. The security VM 202 is a VM instantiated to execute on a hypervisor 400, such as a hypervisor hereinbefore described. For example, the security VM 402 is a VM executing in a VMWARE hypervisor, such as a Microsoft Windows based VM or a Linux based VM. The security VM 402 includes a security function 404 as a software component providing security services in accordance with an embodiment of the present invention. The security function is a software component such as a software service, application, driver, library, script(s) or the like for executing or triggering the execution of a second hypervisor, referred to herein as a security hypervisor 408 for its use in providing security features in accordance with an embodiment of the present invention. As illustrated in Figure 4b, the security hypervisor 408 is executed within the security VM 402 such as a hypervisor suitable for executing in a windows environment executing in a windows VM, or other such suitable arrangements as will be apparent to those skilled in the art. The security hypervisor 408 is provided, by the security function 404 or by other means such as by inclusion in a disk image for the security hypervisor 408 from which the security hypervisor 408 was instantiated, a BIOS 430. The BIOS 430 is a logical representation of a facility of a computer system for effecting the bootstrapping or loading of operating system software for the booting of a computer system. In the embodiment of Figures 4a to 4c the BIOS 430 is operable to bootstrap an operating system for a VM instantiated in the security hypervisor 408. The BIOS 430 is configured to decrypt and load the encrypted disk image 406 by way of a cryptographic function 432 of the BIOS. The cryptographic function 432 is a software function for decrypting at least part of the encrypted disk image 406 for the purpose of instantiating a VM for the encrypted disk image 406 as user VM 410. The cryptographic function 432 can provide decryption of the encrypted disk image 406 a part at a time such that the entire encrypted disk image 406 is not decrypted at the same time. Preferably the BIOS 430 is provided in a secure manner such that the BIOS and any decrypted part of the encrypted disk image 406 is not vulnerable to theft, attack or intrusion such as by executing the BIOS in a protected portion of the security hypervisor 408 or by securing the security VM 402 from unauthorised access. Thus the BIOS 430 of the security hypervisor 408 permits the decryption and loading of the encrypted disk image 406 to instantiate the user VM 410 in spite of the disk image 406 for the user VM 410 being encrypted, including encrypted MBR or boot partition for the user VM 410. Further, while the BIOS 430 decrypts a part of the encrypted disk image 406 required to boot the user VM 410, such as an encrypted MBR or boot partition, the remainder of the encrypted disk image 406 remains encrypted both before, during and after instantiation of the user VM 410. The user VM 410 includes an encryption agent 412 as hereinbefore described and, accordingly, the user VM 410 executes at runtime with encrypted data storage devices as previously described.

Subsequently, as illustrated in Figure 4c, the security function 404 effects a migration of the user VM 410 to the hypervisor 400 as user VM 410'. Such a migration can be performed as previously described, including a live migration. Subsequent to the migration any or both of the security hypervisor 408 and the security VM 402 can be terminated or cease operation. The migrated user VM 410' thus executes with wholly encrypted virtualised data storage devices. Subsequent encrypted disk images stored, captured or recorded for the user VM 410' can be re-instantiated using the approach of Figures 4a to 4c as described above.

In performing the decryption function the cryptography function 432 receives cryptographic key(s) from, for example, the security function 404. The security function 404 can cooperate with, communicate with or otherwise operate with a source of cryptographic information such as cryptographic keys including symmetric and/or asymmetric keys for the provision of decryption function of the cryptography function 432. For example, in one embodiment the security function 404 communicates with a key management server or the like which may be local or remote to the hypervisor 400. Alternatively the security function or additional software (not shown) can manage cryptographic keys and/or encryption algorithms employed. In a further alternative, the cryptographic function 432 and/or BIOS 430 is/are operable to communicate with a key management server or the like to obtain the required cryptographic resources.

Notably, the security function 404 of Figures 4a to 4c and the security function 204 of Figures 2a to 2c may be combined into a common security function for providing the functions and services of both.

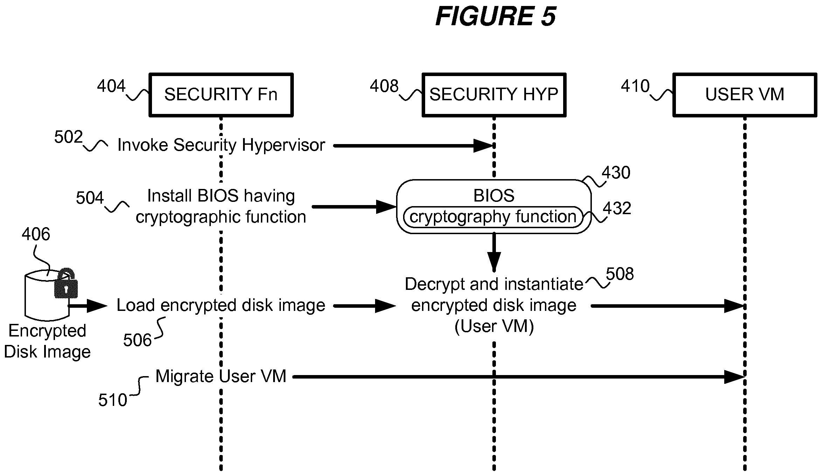

Figure 5 is a flow diagram of a method of instantiating an encrypted disk image 406 for a virtualised computer system in accordance with an embodiment not belonging to the present invention. Initially at step 502 the security function 404 of the security VM 402 invokes a security hypervisor 408. At step 504 the security function 404 provides a BIOS 430 for the security hypervisor 408 including a cryptography function 432. In an alternative embodiment the BIOS 430 and/or cryptographic function 432 can be provided for the security hypervisor 408 otherwise than by the security function 404 such as by being installed, configured, attached, or otherwise provided for the security hypervisor 408. At step 506 the security function 404 loads the encrypted disk image 406 for instantiation as a user VM 410 by the security hypervisor 408. The security hypervisor 408 decrypts and boots the encrypted disk image 406 at step 508 so as to instantiate the user VM 410 having encrypted data storage devices therein. At step 510 the security function migrates the user VM 410 to hypervisor 400 as user VM 410'. Subsequently operation of either or both the security hypervisor 408 and/or the security function 404 can cease.

Figure 6 is a schematic illustration of a security VM 610 in accordance with an embodiment not belonging to the present invention. The arrangement of Figure 6 is alternative to the encryption arrangement of Figures 2a to 2c. A security VM 610 is provided substantially as hereinbefore described operating in a hypervisor 600. The hypervisor 600 includes a data store 608 accessible to multiple VMs executing in the hypervisor 606, such as a shared data store. The security VM 610 of Figure 6 includes a security function 612 that is different to the security function previously described in that the security function 612 of Figure 6 is operable to provide encryption of virtualised data storage disks for a user VM 602. The user VM 602 is a VM instantiated in the hypervisor 606 and including a virtual disk 604. The virtual disk 604 includes one or more partitions, volumes, records, MBRs and the like to provide for an operating system of the user VM 602 to boot and execute. Thus the virtual disk 604 can include an MBR and a primary partition containing operating system software such that a BIOS of the hypervisor 606 is able to instantiate the user VM 602 and boot the operating system for the user VM 602. The security function 612 is adapted to access the user VM using privileged credentials such that the security function 612 is able to access the virtual disk 604 and manage access to the user VM 602 by users and the like. Thus the security function 612 is a privileged function and is preferably kept secure from malicious access, attack and intrusion. Both the user VM 602 and the security VM 610 have access to the data store 608.

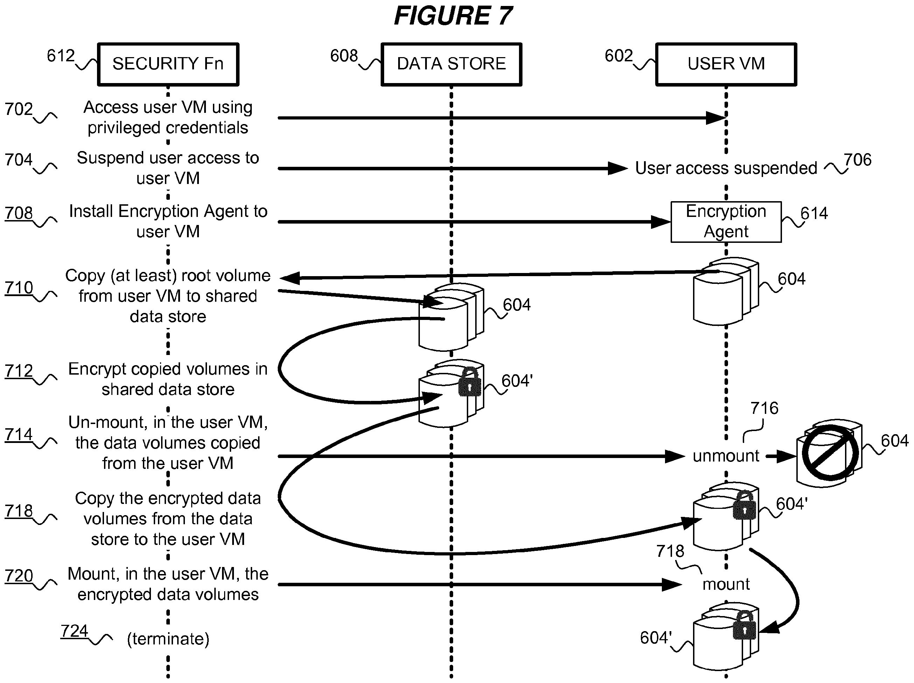

The function of the security function 612 in use to provide WDE for user VM 602 will now be described with respect to Figure 7 which is a flow diagram of a method of providing WDE for a virtualised computer system in accordance with an embodiment not belonging to J the present invention. Initially, at step 702, the security function 612 obtains privileged access to the user VM 602. At step 704 the security function 612 suspends user access to the user VM 602. At step 708 the security function installs, copies or otherwise provides an encryption agent 614 software component in the user VM, the encryption agent 614 being adapted to provide the runtime encryption and decryption functions for read/write operations to a file system of the user VM 602 such as is described above. Notably, the encryption function 614 of Figure 7 need not be capable of undertaking encryption of an entire data storage device as a whole as was required by the corresponding element described above with respect to Figures 2a to 2c but rather encryption agent 614 of Figure 7 is concerned with the interception, detection or replacement of file-system write and read operations to encrypt data written to data storage devices of the user VM 602 and decrypt data read from data storage devices of user VM 602 so that the user VM 602 can operate at runtime with wholly encrypted data storage devices.

Subsequently, at step 710, the security function 612 copies the virtual disk 604 to the shared data store 608 as a duplicate disk. At step 712 the security function wholly encrypts the duplicate disk to provide WDE for the disk including encryption of any MBR and/or boot partitions. Thus an encrypted duplicate disk 604' is provided. At step 714 the security function 612 prompts, triggers or effects an unmounting 716 of the virtual disk 604 from the user VM 602. The unmount process is essentially a software process in the context of virtualised machines and disk devices as is well known to those skilled in the art. Following the unmount the user VM 602 has no further access to the unencrypted virtual disk 604 which may, depending on a security policy, be discarded. At step 718 the security function 612 copies the encrypted duplicate of the virtual disk 604' to the user VM 602 and prompts, triggers or effects a mounting 718 of the encrypted disk 604' so that the user VM 602 can access it via the cryptographic functionality of the encryption agent 614. Subsequently the security function may terminate at step 724 or, alternatively, the security function may be retained for performance of similar functionality in respect of other user virtual machines.

Thus in this way encryption of a whole disk including MBR and/or boot partitions can be achieved for virtualised computer systems providing encryption at runtime and encryption at rest without unencrypted portions of disks so mitigating the security risks associated therewith.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention. Z The invention is defined by the appended claims.

## Claims

1. A computer implemented method of providing whole disk encryption for a virtualised computer system comprising:
providing a software component (204) executing in a first virtual machine (202) for instantiation in a first hypervisor (200), , the software component (204) invoking a second hypervisor (208) within the first virtual machine (202) for instantiating a disk image (206) of the virtualised computer system as a second virtual machine (210), and the software component (204) being configured to install a software agent (212) in the second virtual machine (210), the software agent (212) being adapted to:
a) encrypt the instantiated disk image (206) including encryption of partitions for booting an operating system of the second virtual machine (210) and/or a master boot record of the second virtual machine (210);
b) encrypt data written, by the second virtual machine (210) to the instantiated disk image (206) at a runtime of the second virtual machine (210); and
c) decrypt data read, by the second virtual machine (210), J Z from the instantiated disk image (206) at a runtime of the second virtual machine (210),
wherein the software component (204) is configured to migrate the second virtual machine (210) at a runtime of the second virtual machine (210) to the first hypervisor (200) so as to provide a wholly encrypted disk image for the second virtual machine (210') executing in the first hypervisor (200).

2. The method of claim 1 wherein the software component is further configured to access one or more cryptographic keys for the encryption and decryption from a key management server and to provide the key(s) to the software agent.

3. The method of any preceding claim wherein the migration is a live migration such that the second virtual machine transfers from executing in the second hypervisor to executing in the first hypervisor with continuing operation for users of the second virtual machine.

4. The method of claim 3 wherein the second virtual machine executing in the second hypervisor is a source virtual machine and the live migration includes:
copying a disk image for the source virtual machine to a new virtual machine instantiated in the first hypervisor as a target virtual machine;
maintaining a synchronisation of a state of the target virtual machine with a state of the source virtual machine;
transitioning users of the source virtual machine to the target virtual machine; and
ceasing execution of the source virtual machine such that the target virtual machine constitutes the second virtual machine migrated to the first hypervisor.

5. The method of any preceding claim further comprising: terminating the second hypervisor on completion of the migration.

6. The method of any preceding claim further comprising: terminating the first virtual machine on completion of the migration.

7. A data processing system to provide whole disk encryption for a virtualised computer system, the data processing system comprising a processor and a data store, wherein the processor is adapted to undertake the steps of:
providing a software component (204) executing in a first virtual machine (202) for instantiation in a first hypervisor (200), , the software component (204) invoking a second hypervisor (208) within the first virtual machine (202) for instantiating a disk image (206) of the virtualised computer system as a second virtual machine (210), and the software component (204) being configured to install a software agent (212) in the second virtual machine (210), the software agent (212) being adapted to:
a) encrypt the instantiated disk image (206) including encryption of partitions for booting an operating system of the second virtual machine (210) and/or a master boot record of the second virtual machine (210);
b) encrypt data written, by the second virtual machine (210), to the instantiated disk image (206) at a runtime of the second virtual machine (210); and
c) decrypt data read, by the second virtual machine (210), from the instantiated disk image (206) at a runtime of the second virtual machine (210),
wherein the software component (204) is configured to migrate the second virtual machine (210) at a runtime of the second virtual machine (210) to the first hypervisor (200) so as to provide a wholly encrypted disk image for the second virtual machine (210') executing in the first hypervisor (200).

8. A computer program element comprising computer program code to, when loaded into a computer system and executed thereon, cause the computer to perform the steps of a method as claimed in any of claims 1 to 6.

## Patentansprüche

1. Computerimplementiertes Verfahren zum Bereitstellen einer Verschlüsselung eines ganzen Datenträgers für ein virtualisiertes Computersystem, umfassend:
Bereitstellen einer Softwarekomponente (204), die in einer ersten virtuellen Maschine (202) zur Instanziierung in einem ersten Hypervisor (200) ausgeführt wird, wobei die Softwarekomponente (204) einen zweiten Hypervisor (208) innerhalb der ersten virtuellen Maschine (202) zur Instanziierung eines Datenträgerabbilds (206) des virtualisierten Computersystems als eine zweite virtuelle Maschine (210) aufruft und wobei die Softwarekomponente (204) konfiguriert ist, um einen Software-Agenten (212) in der zweiten virtuellen Maschine (210) zu installieren, wobei der Software-Agent (212) für Folgendes ausgelegt ist:
a) Verschlüsseln des instanziierten Datenträgerabbilds (206), enthaltend eine Verschlüsselung von Partitionen zum Booten eines Betriebssystems der zweiten virtuellen Maschine (210) und/oder eines Master-Boot-Record der zweiten virtuellen Maschine (210);
b) Verschlüsseln von durch die zweite virtuelle Maschine (210) in das instanziierte Datenträgerabbild (206) geschriebenen Daten zu einer Laufzeit der zweiten virtuellen Maschine (210); und
c) Entschlüsseln von durch die zweite virtuelle Maschine (210) aus dem instanziierten Datenträgerabbild (206) ausgelesenen Daten zu einer Laufzeit der zweiten virtuellen Maschine (210),
wobei die Softwarekomponente (204) konfiguriert ist, um die zweite virtuelle Maschine (210) zu einer Laufzeit der zweiten virtuellen Maschine (210) zum ersten Hypervisor (200) zu migrieren, um ein Abbild eines ganz verschlüsselten Datenträgers für die zweite virtuelle Maschine (210'), die im ersten Hypervisor (200) ausgeführt wird, bereitzustellen.

2. Verfahren nach Anspruch 1, wobei die Softwarekomponente ferner konfiguriert ist, um auf einen oder mehrere Kryptografieschlüssel zur Verschlüsselung und zur Entschlüsselung aus einem Schlüsselverwaltungsserver zuzugreifen und den Schlüssel (die Schlüssel) dem Software-Agenten bereitzustellen.

3. Verfahren nach einem vorhergehenden Anspruch, wobei die Migration eine Livemigration ist, sodass die zweite virtuelle Maschine bei einem weiter laufenden Betrieb für Benutzer der zweiten virtuellen Maschine von der Ausführung im zweiten Hypervisor zur Ausführung im ersten Hypervisor wechselt.

4. Verfahren nach Anspruch 3, wobei die zweite virtuelle Maschine, die im zweiten Hypervisor ausgeführt wird, eine virtuelle Quellmaschine ist und die Livemigration Folgendes enthält:
Kopieren eines Datenträgerabbilds für die virtuelle Quellmaschine in eine neue virtuelle Maschine, die im ersten Hypervisor als eine virtuelle Zielmaschine instanziiert wird;
Aufrechterhalten einer Synchronisation eines Status der virtuellen Zielmaschine mit einem Status der virtuellen Quellmaschine;
Überführen von Benutzern der virtuellen Quellmaschine in die virtuelle Zielmaschine; und
Abbrechen der Ausführung der virtuellen Quellmaschine, sodass die virtuelle Zielmaschine die zum ersten Hypervisor migrierte zweite virtuelle Maschine bildet.

5. Verfahren nach einem vorhergehenden Anspruch, ferner umfassend: Beenden des zweiten Hypervisors beim Abschluss der Migration.

6. Verfahren nach einem vorhergehenden Anspruch, ferner umfassend: Beenden der ersten virtuellen Maschine beim Abschluss der Migration.

7. Datenverarbeitungssystem zum Bereitstellen einer Verschlüsselung eines ganzen Datenträgers für ein virtualisiertes Computersystem, wobei das Datenverarbeitungssystem einen Prozessor und einen Datenspeicher umfasst, wobei der Prozessor dafür ausgelegt ist, folgende Schritte abzuarbeiten:
Bereitstellen einer Softwarekomponente (204), die in einer ersten virtuellen Maschine (202) zur Instanziierung in einem ersten Hypervisor (200) ausgeführt wird, wobei die Softwarekomponente (204) einen zweiten Hypervisor (208) innerhalb der ersten virtuellen Maschine (202) zur Instanziierung eines Datenträgerabbilds (206) des virtualisierten Computersystems als eine zweite virtuelle Maschine (210) aufruft und wobei die Softwarekomponente (204) konfiguriert ist, um einen Software-Agenten (212) in der zweiten virtuellen Maschine (210) zu installieren, wobei der Software-Agent (212) für Folgendes ausgelegt ist:
a) Verschlüsseln des instanziierten Datenträgerabbilds (206), enthaltend eine Verschlüsselung von Partitionen zum Booten eines Betriebssystems der zweiten virtuellen Maschine (210) und/oder eines Master-Boot-Record der zweiten virtuellen Maschine (210);
b) Verschlüsseln von durch die zweite virtuelle Maschine (210) in das instanziierte Datenträgerabbild (206) geschriebenen Daten zu einer Laufzeit der zweiten virtuellen Maschine (210); und
c) Entschlüsseln von durch die zweite virtuelle Maschine (210) aus dem instanziierten Datenträgerabbild (206) ausgelesenen Daten zu einer Laufzeit der zweiten virtuellen Maschine (210), wobei die Softwarekomponente (204) konfiguriert ist, um die zweite virtuelle Maschine (210) zu einer Laufzeit der zweiten virtuellen Maschine (210) zum ersten Hypervisor (200) zu migrieren, um ein Abbild eines ganz verschlüsselten Datenträgers für die zweite virtuelle Maschine (210'), die im ersten Hypervisor (200) ausgeführt wird, bereitzustellen.

8. Computerprogrammelement, das Computerprogrammcode umfasst, um, wenn er in ein Computersystem geladen und in ihm ausgeführt wird, zu bewirken, dass der Computer die Schritte eines Verfahrens nach einem der Ansprüche 1 bis 6 durchführt.

## Revendications

1. Procédé mis en œuvre par ordinateur pour assurer le cryptage de l'ensemble du disque d'un système informatique virtualisé, comprenant les étapes suivantes :
fournir un composant logiciel (204) s'exécutant dans une première machine virtuelle (202) pour une instanciation dans un premier hyperviseur (200), le composant logiciel (204) invoquant un second hyperviseur (208) dans la première machine virtuelle (202) pour instancier une image de disque (206) du système informatique virtualisé en tant que seconde machine virtuelle (210), et le composant logiciel (204) étant configuré pour installer un agent logiciel (212) dans la seconde machine virtuelle (210), l'agent logiciel (212) étant adapté pour :
a) crypter l'image de disque instanciée (206), comprenant le cryptage des partitions pour le démarrage d'un système d'exploitation de la seconde machine virtuelle (210) et/ou un enregistrement d'amorçage maître de la seconde machine virtuelle (210) ;
b) crypter, par la seconde machine virtuelle (210), les données écrites sur l'image de disque instanciée (206) sur un moteur d'exécution de la seconde machine virtuelle (210) ; et
c) décrypter, par la seconde machine virtuelle (210), les données lues sur l'image de disque instanciée (206) sur un moteur d'exécution de la seconde machine virtuelle (210),
où le composant logiciel (204) est configuré pour faire migrer la seconde machine virtuelle (210) vers un moteur d'exécution de la seconde machine virtuelle (210) vers le premier hyperviseur (200) de manière à fournir une image de disque entièrement cryptée pour la seconde machine virtuelle (210') s'exécutant dans le premier hyperviseur (200).

2. Procédé selon la revendication 1, dans lequel le composant logiciel est en outre configuré pour accéder à une ou plusieurs clés cryptographiques pour le cryptage et le décryptage à partir d'un serveur de gestion de clés et pour fournir la ou les clés à l'agent logiciel.

3. Procédé selon l'une quelconque des revendications précédentes, dans lequel la migration est une migration en direct, telle que la seconde machine virtuelle passe d'une exécution dans le second hyperviseur à une exécution dans le premier hyperviseur avec une opération continue pour les utilisateurs de la seconde machine virtuelle.

4. Procédé selon la revendication 3, dans lequel la seconde machine virtuelle s'exécutant dans le second hyperviseur est une machine virtuelle source et la migration en direct comprend les étapes suivantes :
copier une image de disque pour la machine virtuelle source sur une nouvelle machine virtuelle instanciée dans le premier hyperviseur en tant que machine virtuelle cible ;
maintenir la synchronisation d'un état de la machine virtuelle cible avec un état de la machine virtuelle source ;
procéder à une transition des utilisateurs de la machine virtuelle source vers la machine virtuelle cible ; et
cesser l'exécution de la machine virtuelle source de manière à ce que la machine virtuelle cible constitue la seconde machine virtuelle qui a migré vers le premier hyperviseur.

5. Procédé selon l'une quelconque des revendications précédentes comprenant en outre d'arrêter le second hyperviseur à l'issue de la migration.

6. Procédé selon l'une quelconque des revendications précédentes comprenant en outre d'arrêter la première machine virtuelle à l'issue de la migration.

7. Système de traitement de données pour assurer le cryptage de l'ensemble du disque d'un système informatique virtualisé, le système de traitement de données comprenant un processeur et une mémoire de données, où le processeur est adapté pour exécuter les étapes suivantes :
fournir un composant logiciel (204) s'exécutant dans une première machine virtuelle (202) pour une instanciation dans un premier hyperviseur (200), le composant logiciel (204) invoquant un second hyperviseur (208) dans la première machine virtuelle (202) pour instancier une image de disque (206) du système informatique virtualisé en tant que seconde machine virtuelle (210), et le composant logiciel (204) étant configuré pour installer un agent logiciel (212) dans la seconde machine virtuelle (210), l'agent logiciel (212) étant adapté pour :
a) crypter l'image de disque instanciée (206), comprenant le cryptage des partitions pour le démarrage d'un système d'exploitation de la seconde machine virtuelle (210) et/ou un enregistrement d'amorçage maître de la seconde machine virtuelle (210) ;
b) crypter, par la seconde machine virtuelle (210), les données écrites sur l'image de disque instanciée (206) sur un moteur d'exécution de la seconde machine virtuelle (210) ; et
c) décrypter, par la seconde machine virtuelle (210), les données lues sur l'image de disque instanciée (206) sur un moteur d'exécution de la seconde machine virtuelle (210),
où le composant logiciel (204) est configuré pour faire migrer la seconde machine virtuelle (210) vers un moteur d'exécution de la seconde machine virtuelle (210) vers le premier hyperviseur (200) de manière à fournir une image de disque entièrement cryptée pour la seconde machine virtuelle (210') s'exécutant dans le premier hyperviseur (200).

8. Élément de programme informatique comprenant un code de programme informatique destiné, lorsqu'il est chargé dans un système informatique et exécuté sur celui-ci, à amener l'ordinateur à exécuter les étapes d'un procédé tel que revendiqué dans l'une quelconque des revendications 1 à 6.
